(19) Europäisches Patentamt
European Patent Office
Office européen des brevets

(11) EP 3 865 600 A1

(12) EUROPEAN PATENT APPLICATION
published in accordance with Art. 153(4) EPC

(43) Date of publication:
18.08.2021 Bulletin 2021/33

(51) Int Cl.:
C22C 38/58 (2006.01)     C22C 38/44 (2006.01)
C22C 38/02 (2006.01)     C22C 38/00 (2006.01)
C22C 38/04 (2006.01)     C21D 8/02 (2006.01)

(21) Application number: 19883708.0

(22) Date of filing: 31.10.2019

(86) International application number:
PCT/KR2019/014536

(87) International publication number:
WO 2020/101226 (22.05.2020 Gazette 2020/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.11.2018 KR 20180139428

(71) Applicant: POSCO
Pohang-si, Gyeongsangbuk-do 37859 (KR)

(72) Inventors:
• KIM, Kyung-Hun
  Pohang-si Gyeongsangbuk-do 37671 (KR)
• KIM, Ji Soo
  Pohang-si Gyeongsangbuk-do 37659 (KR)
• HA, Man Jin
  Pohang-si Gyeongsangbuk-do 37669 (KR)
• KIM, Hak
  Pohang-si Gyeongsangbuk-do 37656 (KR)
• JEON, Jong Jin
  Pohang-si Gyeongsangbuk-do 37656 (KR)

(74) Representative: Potter Clarkson
The Belgrave Centre
Talbot Street
Nottingham NG1 5GG (GB)

(54) HIGH-STRENGTH NONMAGNETIC AUSTENITIC STAINLESS STEEL AND MANUFACTURING METHOD THEREFOR

(57) Disclosed are austenitic stainless steel that can exhibit high strength while having non-magnetic properties, and a manufacturing method thereof.

The high strength non-magnetic austenitic stainless steel according to an embodiment of present disclosure includes, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities, satisfies C+N: 0.25% or more, and satisfies following Formulas (1) and (2).

$$(1) \quad [\{Cr+Mo+1.5*Si+18\}/\{Ni+30*(C+N)+0.5*Mn+36\}+0.262]*161-161-\log(\text{cooling rate}) < 0 \tag{1}$$

$$(2) \quad 551 - 462*(C+N) - 9.2*Si - 8.1*Mn - 13.7*Cr - 29*Ni - 18.5*Mo \leq -200 \tag{2}$$

【FIG. 1】

**Description**

[Technical Field]

The present disclosure relates to a non-magnetic austenitic stainless steel, and more particularly, to an austenitic stainless steel capable of exhibiting high strength while having non-magnetic properties, and a manufacturing method thereof.

[Background Art]

Recently, with the advent of smart devices having various functions, new demands for factors that can affect the functions of devices are intensifying even in materials used in electronic devices. In particular, there is an increasing demand for magnetic reduction to improve electrical efficiency and prevent malfunction. Since 300 series stainless steel generally exhibits non-magnetic properties due to the non-magnetic properties of the austenite phase, it is widely used as a material for such electronic devices.

On the other hand, when solidifying 300 series stainless steel, delta-ferrite is formed. Delta-ferrite, which is formed during solidification, has the effect of inhibiting grain growth and improving hot workability. In general, delta-ferrite can be stably decomposed in a temperature range of 1,300 to 1,450°C through heat treatment. However, there are cases where delta-ferrite remains without being completely removed even in the rolling and annealing process. Due to the residual delta-ferrite, magnetism is increased, and thus, there is a problem that it cannot be used as a material for electronic devices.

In addition, the 300 series stainless steel is subjected to work hardening to increase its strength, and at this time, the austenite phase is transformed into a martensite phase. The martensite phase that appears during work hardening is called the strain-induced martensite phase, and the strain-induced martensite phase rapidly increases the strength of the material. Accordingly, the strain-induced martensite phase is widely used to increase the strength of 300 series stainless steel. However, since the martensite phase exhibits magnetism, there is a problem in that it cannot satisfy the non-magnetic properties required by electronic devices.

[Disclosure]

[Technical Problem]

The present disclosure provides a non-magnetic austenitic stainless steel capable of optimizing the ferrite fraction formed during solidification of austenitic stainless steel, preventing the occurrence of magnetism by inhibiting the formation of the strain-induced martensite phase formed during strengthening, and securing high strength by utilizing a fine secondary phase, and a manufacturing method thereof.

[Technical Solution]

In accordance with an aspect of the present disclosure, a high strength non-magnetic austenitic stainless hot-rolled annealed steel sheet includes, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities, and satisfies a following Formula (1).

$$(1) \quad [\{Cr+Mo+1.5*Si+18\}/\{Ni+30*(C+N)+0.5*Mn+36\}+0.262]*161-161-$$

log(cooling rate) < 0

Here, Cr, Mo, Si, Ni, C, N, Mn mean the content (% by weight) of each element, and the cooling rate means the cooling rate (°C/s) of the cast slab solidified from molten steel.

The high strength non-magnetic austenitic stainless hot-rolled annealed steel sheet may have a permeability μ of 1.01 or less.

The high strength non-magnetic austenitic stainless hot-rolled annealed steel sheet may satisfy C+N: 0.25% or more.

In accordance with another aspect of the present disclosure, a high strength non-magnetic austenitic stainless cold-rolled steel sheet includes, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities, satisfies C+N: 0.25% or more, and satisfies following Formulas (1) and (2).

(1) $\quad$ [{Cr+Mo+1.5*Si+18}/{Ni+30*(C+N)+0.5*Mn+36}+0.262]*161-161-

log(cooling rate) < 0

(2) 551 - 462*(C+N) - 9.2*Si - 8.1*Mn - 13.7*Cr – 29*Ni - 18.5*Mo $\leq$ -200

The cold-rolled steel sheet may be a cold-rolled material with a reduction ratio of 80% or more, and may have a permeability $\mu$ of 1.02 or less and a yield strength of 1,280MPa or more.

The number of carbonitride precipitates having an average diameter of 20 to 200 nm may be 40 pieces/$\mu$m$^2$ or more.

In accordance with another aspect of the present disclosure, a manufacturing method of a high strength non-magnetic austenitic stainless steel includes: manufacturing a hot-rolled annealed steel sheet by performing hot rolling and annealing heat treatment on a slab including, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less %, C+N: 0.25% or more, the remainder of iron (Fe) and other inevitable impurities; and manufacturing a cold-rolled steel sheet by cold rolling the hot-rolled annealed steel sheet at a reduction ratio of 80% or more, and the slab satisfies following Formulas (1) and (2), a permeability $\mu$ of the cold-rolled steel sheet is 1.02 or less.

(1) $\quad$ [{Cr+Mo+1.5*Si+18}/{Ni+30*(C+N)+0.5*Mn+36}+0.262]*161-161-

log(cooling rate) < 0

(2) 551 - 462*(C+N) - 9.2*Si - 8.1*Mn - 13.7*Cr – 29*Ni - 18.5*Mo $\leq$ -200

The permeability $\mu$ of the hot-rolled annealed steel sheet may be 1.01 or less, and an increase in permeability by the cold rolling may be 0.01 or less.

The cold-rolled steel sheet may have a yield strength of 1,280 MPa or more, and a number of carbonitride precipitates having an average diameter of 20 to 200 nm may be 40 pieces/$\mu$m$^2$ or more.

[Advantageous Effects]

The austenitic stainless steel according to the embodiment of the present disclosure can secure non-magnetic properties by optimizing the ferrite fraction formed during solidification and suppressing strain-induced martensite transformation. Suppression of magnetism can bring about effects of preventing communication errors in smart devices and increasing power efficiency.

In addition, the properties of strength improvement can be expressed by using alloy components instead of improving the strength through the strain-induced martensite transformation. Increasing the strength can contribute to the weight reduction of parts, thereby reducing the weight of smart devices.

[Description of Drawings]

FIG. 1 is an optical microscope photograph showing a fine carbonitride secondary phase formed according to an embodiment of the present disclosure.

FIG. 2 is a diagram showing an analysis of constituent elements of a fine carbonitride secondary phase formed according to an embodiment of the present disclosure.

[Best Mode]

In accordance with an aspect of the present disclosure, a high strength non-magnetic austenitic stainless hot-rolled annealed steel sheet includes, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities, and satisfies a following Formula (1).

(1)     $[\{Cr+Mo+1.5*Si+18\}/\{Ni+30*(C+N)+0.5*Mn+36\}+0.262]*161-161-\log(\text{cooling rate}) < 0$

Here, Cr, Mo, Si, Ni, C, N, Mn mean the content (% by weight) of each element, and the cooling rate means the cooling rate (°C/s) of the cast slab solidified from molten steel.

[Modes of the Invention]

Hereinafter, the embodiments of the present disclosure will be described in detail with reference to the accompanying drawings. The following embodiments are provided to transfer the technical concepts of the present disclosure to one of ordinary skill in the art. However, the present disclosure is not limited to these embodiments, and may be embodied in another form. In the drawings, parts that are irrelevant to the descriptions may be not shown in order to clarify the present disclosure, and also, for easy understanding, the sizes of components are more or less exaggeratedly shown.

In the present disclosure, the fraction of the ferrite phase formed upon solidification of austenitic stainless steel was optimized. In addition, even in the case of rapid cooling, optimum conditions for preventing the formation of magnetism were derived in consideration of the increase in the remaining ferrite phase. In addition, the degree of stabilization of the austenite phase was increased to suppress the formation of the strain-induced martensite phase formed during high strength. Through this, the generation of magnetism was prevented, and high strength was secured through solid solution strengthening by addition of interstitial elements such as C and N and precipitation hardening using a fine carbonitride secondary phase to increase strength.

A high strength non-magnetic austenitic stainless steel according to an embodiment of present disclosure includes, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities.

Hereinafter, the reason for limiting the numerical value of the alloy element content in the embodiment of the present disclosure is described. Hereinafter, unless otherwise specified, the unit is % by weight.

The content of C is 0.02 to 0.12%.

C is a strong austenite phase stabilizing element, and is an element effective in increasing material strength by solid solution strengthening. It contributes to the stabilization of the austenite phase in order to exhibit nonmagnetic properties, and in particular, in the present disclosure, it contributes to increase the strength by forming a fine precipitated phase of 200 nm or less. In order to secure the austenite phase stabilization, the addition of 0.02% or more is required. In addition, excessive addition causes coarsening of the precipitated phase and consequently lowering of corrosion resistance, so it is preferable to limit it to 0.12% or less.

The content of Si is 1.2% or less.

Si exhibits an effect on improving corrosion resistance, but there is a problem of increasing the permeability as a ferrite stabilizing element. In addition, when excessive, it promotes precipitation of intermetallic compounds such as σ phase, thereby lowering mechanical properties and corrosion resistance, so it is preferable to limit it to 1.2% or less.

The content of Mn is 0.5 to 2.0%.

Mn is an austenite phase stabilizing element such as C and Ni, and is effective for nonmagnetic strengthening. However, since the increase of the Mn content is involved in the formation of inclusions such as MnS, the corrosion resistance decreases, it is preferable to limit the Mn content to 0.5 to 2.0%.

The content of Cr is 17.0 to 22.0%.

Cr is the most important element for improving the corrosion resistance of stainless steel. In order to secure sufficient corrosion resistance, it is preferable to include 17.0% or more, but since Cr is a ferrite phase stabilizing element, it is necessary to limit the addition in non-magnetic steel. When the Cr content is increased, the ferrite phase fraction increases, so that a large amount of Ni must be included in order to obtain non-magnetic properties, so the cost increases, and the formation of the σ phase is promoted, which causes a decrease in mechanical properties and corrosion resistance. Therefore, it is preferable to limit the Cr content to 22.0% or less.

The content of Ni is 11.0 to 15.0%.

Ni is the most powerful element of the austenite phase stabilizing element and must be contained by 11.0% or more to obtain non-magnetic properties. However, since the increase in Ni content is directly related to the increase in the price of raw materials, it is preferable to limit Ni content to 15% or less.

The content of Mo is 3.0% or less.

Mo is a useful element for improving corrosion resistance, but as a ferrite phase stabilizing element, when a large amount is added, the ferrite phase fraction increases, making it difficult to obtain non-magnetic properties. In addition, it is preferable to limit it to 3.0% or less because the formation of a σ phase is promoted, which causes a decrease in mechanical properties and corrosion resistance.

The content of N is 0.25% or less.

N is an element useful for stabilizing the austenite phase and is an essential element for securing nonmagnetic properties. However, when a large amount is added, the hot workability decreases and the yield of the steel is lowered, so it is preferable to limit it to 0.25% or less.

Excluding the above alloying elements, the rest of the stainless steel is made of Fe and other inevitable impurities.

In general, 300 series stainless steels are mostly composed of austenite phase and some ferrite phases formed during solidification appear as a remaining microstructure. The austenite phase present in the structure of 300 series stainless steel has a face-centered cubic structure and does not exhibit magnetism. However, the ferrite phase becomes magnetic due to the characteristics of the tissue having a body-centered cubic structure. Some of the residual ferrite phases are residual ferrite formed upon solidification, and magnetic properties of a desired size can be obtained by controlling the content of the residual ferrite phases. In particular, in the case of non-magnetic steel, it is essential to reduce or eliminate the fraction of the ferrite phase as low as possible.

The content of the ferrite phase remaining during solidification is greatly influenced by the alloy components. In addition, according to the recent development of various manufacturing technologies, it is possible to apply various cooling rates during manufacturing, and at this time, the content of the residual ferrite phase may be changed according to the cooling rate.

The content of ferrite remaining during solidification in the 300 series stainless steel is affected by the ratio of component elements such as Ni, C, and N that stabilize the austenite phase and the component elements such as Cr, Si, and Mo that stabilize the ferrite phase. Typically, the residual ferrite fraction is predicted through an empirical equation such as the following [relational expression], and it is known that there is a tendency to be proportional thereto.

[relational expression]

$$[\{Cr+Mo+1.5*Si+18\}/\{Ni+30*(C+N)+0.5*Mn+36\}+0.262]*161 - 161$$

However, when the cooling rate of the cast slab is fast, it is difficult to have a sufficient time for the ferrite to decompose in the austenite single phase region that passes during the temperature decrease due to solidification, so a relatively high fraction of ferrite remains. For this reason, in the present disclosure, Formula (1) was derived considering the cooling rate (°C/s) of cast slab solidified from molten steel.

For various 300 series stainless steels, when the value of Formula (1) has a negative value, it may represent a magnetic value of permeability μ of 1.02 or less required by smart devices.

$$(1) \quad [\{Cr+Mo+1.5*Si+18\}/\{Ni+30*(C+N)+0.5*Mn+36\}+0.262]*161 - 161 - \log(\text{cooling rate}) < 0$$

In order for the final cold-rolled material to secure non-magnetic properties of permeability of 1.02 or less, it is desirable that the permeability of hot-rolled annealed steel sheet be 1.01 or less. If the value of Formula (1) is 0 or more, residual ferrite is formed, and the permeability of the hot-rolled annealed steel sheet exceeds 1.01.

On the other hand, 300 series stainless steel improves strength through work hardening. As the martensite phase is formed according to the amount of deformation, the strength increases. However, in materials for smart devices, the martensite phase exhibits magnetism and cannot be used as a suitable part. In the present disclosure, a range of components that do not cause an increase in magnetism during work hardening was derived by suppressing martensite transformation through Formula (2).

$$(2) \quad 551 - 462*(C+N) - 9.2*Si - 8.1*Mn - 13.7*Cr – 29*Ni - 18.5*Mo \leq -200$$

When the range of Formula (2) is satisfied, only a slight increase in permeability of 0.01 or less, more preferably 0.005 or less appears. In particular, when formulas (1) and (2) are satisfied at the same time, the final cold-rolled material can suppress the formation of the strain-induced martensite phase even when cold-rolled by 60% or more, so that the magnetic value of permeability $\mu$ of 1.02 or less required by a smart device may be indicated.

On the other hand, suppression of martensitic transformation does not obtain an increase in strength that occurs during work hardening of 300 series stainless steel. In the present disclosure, in order to prevent such a decrease in strength, high strengthning was secured by using solid solution strengthening by addition of interstitial elements such as C and N and precipitation of fine secondary phases.

According to an embodiment of the present disclosure, C+N may be 0.25% or more and the number of carbonitride precipitates having an average diameter of 20 to 200 nm may be 40 pieces/$\mu$m$^2$ or more.

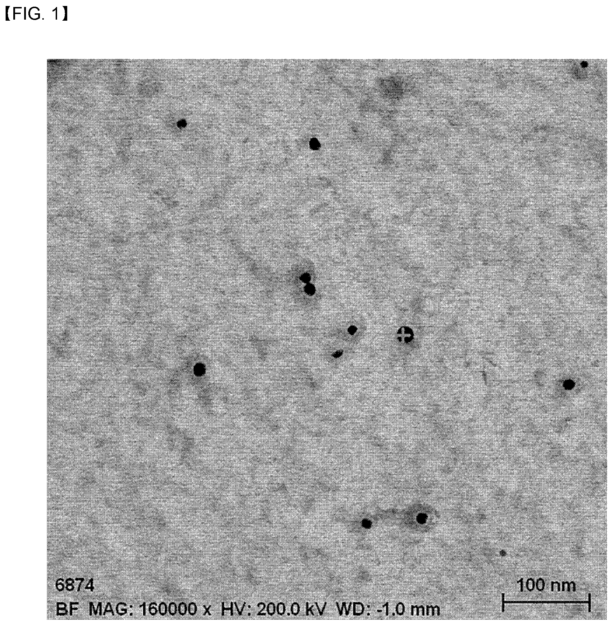

Usually, excessive addition of C and N causes a decrease in corrosion resistance due to carbonitride formation. If the content of C, N, which has excellent bonding strength with Cr, is excessive, Cr, which is effective for corrosion resistance, is formed as carbonitride at the ferrite-austenite phase boundary, and since the corrosion resistance decreases due to the decrease in the Cr content around the grain boundaries, the contents of C and N are generally limited to 0.05% or less, respectively. The present disclosure considers even the case of solidification at a fast cooling rate of 100°C/sec or more, and at this time, when the sum of the C content and the N content has a value of 2500 ppm or more, a yield strength of 1,280 MPa or more can be exhibited. The added C and N are distributed in the form of a fine precipitated carbonitride, and it can be confirmed through microstructure analysis that 10 or more fine carbonitrides of 200 nm or less are formed within 0.5 x 0.5$\mu$m$^2$ as shown in FIG. 1.

Next, a manufacturing method of a high strength non-magnetic austenitic stainless steel according to an embodiment of the present disclosure is described.

The manufacturing method of the non-magnetic austenitic stainless steel according to the present disclosure can be manufactured through a general process of austenitic stainless steel. It is important to control the composition of alloy elements in order to prevent the formation of the residual ferrite fraction and strain-induced martensite phase during cold rolling after hot rolling annealing heat treatment.

The manufacturing method of a high strength non-magnetic austenitic stainless steel may include: manufacturing a hot-rolled annealed steel sheet by performing hot rolling and annealing heat treatment on a slab including, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, C+N: 0.25% or more, the remainder of iron (Fe) and other inevitable impurities; and manufacturing a cold-rolled steel sheet by cold rolling the hot-rolled annealed steel sheet at a reduction ratio of 80% or more.

Hot-rolled annealed steel sheet can show permeability $\mu$ of 1.01 or less by satisfying Formula (1). In addition, by satisfying Formula (2), the increase in permeability due to cold rolling may be 0.01 or less, and further, the increase in permeability of 0.005 or more is possible. Accordingly, the cold-rolled steel sheet can exhibit permeability of 1.02 or less.

Hereinafter, it will be described in more detail through a preferred embodiment of the present disclosure.

Example

Steel having the alloy composition shown in Table 1 was prepared by applying three cooling rates.

In the continuous casting method, a 200mm thick slab was cast at an average cooling rate of 10°C/s, and then hot-annealed steel sheets were manufactured through hot rolling and annealing heat treatment processes. After heating at 1,250°C for 2 hours, hot rolling was performed to a thickness of 2 mm to prepare a hot rolled coil, and permeability was measured after annealing heat treatment at 1,150°C.

In addition, an average cooling rate of 50°C/s was applied to prepare an ingot material, and hot rolling and annealing heat treatment were performed under the same conditions as the continuous casting method to produce a 2mm hot rolled coil.

Finally, a 2mm hot-rolled coil was manufactured at an average cooling rate of 100°C/s using a thin plate casting method, and permeability was measured after annealing heat treatment at 1,150°C.

After that, the 2mm hot-rolled coils of each steel type were cold-rolled by 80%, and the permeability of the cold-rolled steel sheet was measured, and the permeability was measured using a contact type ferometer.

<Table 1 >

| Steel grade No. | C | Si | Mn | Cr | Ni | Mo | N | Cooling rate (°C/sec) |
|---|---|---|---|---|---|---|---|---|
| 1 | 0.109 | 0.95 | 1.10 | 20.6 | 12.0 | 0.07 | 0.205 | 100 |
| 2 | 0.056 | 1.02 | 0.95 | 21.4 | 12.1 | 0 | 0.240 | 100 |
| 3 | 0.097 | 0.85 | 1.03 | 20.2 | 11.8 | 0 | 0.210 | 100 |

(continued)

| Steel grade No. | C | Si | Mn | Cr | Ni | Mo | N | Cooling rate (°C/sec) |
|---|---|---|---|---|---|---|---|---|
| 4 | 0.120 | 0.91 | 0.90 | 20.9 | 12.1 | 0 | 0.230 | 100 |
| 5 | 0.026 | 0.99 | 0.99 | 20.6 | 12.1 | 0.06 | 0.236 | 100 |
| 6 | 0.034 | 1.01 | 1.10 | 20.4 | 12.2 | 0 | 0.218 | 100 |
| 7 | 0.022 | 0.43 | 1.32 | 17.4 | 14.7 | 2.63 | 0.054 | 50 |
| 8 | 0.022 | 0.52 | 1.31 | 17.3 | 14.7 | 2.52 | 0.036 | 10 |
| 9 | 0.021 | 0.66 | 1.00 | 20.3 | 11.9 | 0 | 0.188 | 100 |
| 10 | 0.031 | 1.00 | 1.00 | 20.3 | 12.1 | 0 | 0.177 | 50 |
| 11 | 0.023 | 0.97 | 1.00 | 21.0 | 10.0 | 0.52 | 0.150 | 10 |
| 12 | 0.022 | 1.01 | 0.97 | 21.2 | 9.8 | 0.48 | 0.161 | 10 |
| 13 | 0.020 | 0.95 | 1.10 | 21.5 | 10.2 | 0.52 | 0.157 | 10 |
| 14 | 0.041 | 0.97 | 0.83 | 20.6 | 10.9 | 0.54 | 0.164 | 10 |
| 15 | 0.019 | 0.47 | 1.06 | 16.1 | 10.1 | 2.04 | 0.014 | 10 |
| 16 | 0.024 | 0.67 | 0.67 | 17.7 | 12.1 | 2.04 | 0.020 | 10 |
| 17 | 0.032 | 1.01 | 2.88 | 20.7 | 10.0 | 0 | 0.172 | 50 |
| 18 | 0.031 | 0.97 | 3.07 | 20.7 | 10.9 | 0 | 0.133 | 50 |
| 19 | 0.030 | 1.00 | 1.95 | 21.6 | 13.7 | 0 | 0.125 | 50 |
| 20 | 0.055 | 0.44 | 1.03 | 18.2 | 8.1 | 0.14 | 0.046 | 10 |
| 21 | 0.046 | 0.44 | 1.06 | 18.3 | 8.1 | 0.13 | 0.039 | 100 |

<Table 2>

| | Steel grade No. | Formula (1) | hot-rolled annealed steel sheet permeability($\mu$) | Formula (2) | cold-rolled steel sheet permeability ($\mu$) | Increase in permeability |
|---|---|---|---|---|---|---|
| Inventive Example | 1 | -5.6 | 1.000 | -244 | 1.004 | 0.004 |
| | 2 | -2.1 | 1.002 | -247 | 1.005 | 0.003 |
| | 3 | -6.3 | 1.001 | -226 | 1.002 | 0.001 |
| | 4 | -7.0 | 1.002 | -264 | 1.002 | 0 |
| | 5 | -2.3 | 1.002 | -220 | 1.005 | 0.003 |
| | 6 | -2.7 | 1.002 | -217 | 1.006 | 0.004 |
| | 7 | -1.0 | 1.002 | -212 | 1.005 | 0.003 |
| | 8 | -0.6 | 1.002 | -200 | 1.005 | 0.003 |

(continued)

|  | Steel grade No. | Formula (1) | hot-rolled annealed steel sheet permeability($\mu$) | Formula (2) | cold-rolled steel sheet permeability ($\mu$) | Increase in permeability |
|---|---|---|---|---|---|---|
| Comparative Example | 9 | -1.1 | 1.001 | -183 | 1.061 | 0.06 |
|  | 10 | -0.3 | 1.002 | -191 | 1.025 | 0.023 |
|  | 11 | 9.9 | 1.361 | -133 | 1.473 | 0.112 |
|  | 12 | 10.5 | 1.062 | -134 | 1.351 | 0.289 |
|  | 13 | 10.5 | 1.013 | -148 | 1.076 | 0.063 |
|  | 14 | 4.4 | 1.016 | -167 | 1.031 | 0.015 |
|  | 15 | 6.9 | 1.046 | -28 | 2.000 | 0.954 |
|  | 16 | 7.7 | 1.034 | -111 | 1.360 | 0.326 |
|  | 17 | 3.8 | 1.015 | -149 | 1.104 | 0.089 |
|  | 18 | 4.0 | 1.038 | -158 | 1.097 | 0.059 |
|  | 19 | 2.5 | 1.021 | -239 | 1.021 | 0 |
|  | 20 | 7.2 | 1.055 | 6 | 2.000 | 0.945 |
|  | 21 | 9.9 | 1.316 | 12 | 2.000 | 0.684 |

As shown in Table 2, when the value of Formula (1) shows a negative value less than 0, the permeability of the hot-rolled annealed steel sheet was found to be less than 1.01, specifically, it was found to be very small as 1.002 or less in 1 to 10 steel grades.

Looking at Tables 1 and 2 together, only 1 to 8 of 1 to 10 steel grades satisfying the alloy component and Formula (1) of the present disclosure satisfy Formula (2) at the same time. The 1 to 8 steel grades are also satisfied with Formula (2) at the same time, therefore the formation of strain-induced martensite phase was suppressed even during cold rolling with 80% reduction ratio in the 1 to 8 steel grades, and the permeability of the final cold-rolled steel sheet was not increased and satisfies less than 1.02. In fact, it showed an increase in permeability of 0.004 or less. However, even though the 9 and 10 steel grades satisfies the alloying component, the value of Formula (2) was higher than -200, so the permeability was increased, and accordingly, the permeability exceeded 1.02.

For steel grades 11 to 18, the permeability of the hot-rolled annealed steel sheet exceeded 1.01 due to dissatisfaction with both Formula (1) and Formula (2), and the increase in permeability was high, and the permeability of the final cold-rolled steel sheet also exceeded 1.02. In particular, in the case of 19 steels that correspond to the alloy composition of the present disclosure and also satisfy Formula (2), the increase in permeability was 0, but the permeability of the hot-rolled annealed steel sheet already exceeded 1.02 due to dissatisfaction with Formula (1). From this, it was confirmed that it is important to control the permeability of hot-rolled annealed steel sheet to 1.01 or less through satisfaction of Formula (1).

For steel grades 15, 20, and 21, where the value of Formula (2) is relatively higher than -200, which is the upper limit of the present disclosure, the increase in permeability was 0.5 or more. Therefore, it can be seen that a large amount of strain-induced martensite phase was generated by cold rolling.

Table 3 shows the results of measuring the yield strength of 80% cold rolled material according to the C+N content.

<Table 3>

| | Steel grade No. | C+N | Yield strength (MPa) |
|---|---|---|---|
| Inventive Example | 1 | 0.3134 | 1,360 |
| | 2 | 0.2960 | 1,312 |
| | 3 | 0.3070 | 1,355 |
| | 4 | 0.3500 | 1,410 |
| | 5 | 0.2619 | 1,289 |
| | 6 | 0.2520 | 1,283 |
| Comparative Example | 7 | 0.0760 | 1,229 |
| | 8 | 0.0584 | 1,119 |
| | 9 | 0.2090 | 1,249 |
| | 10 | 0.2080 | 1,241 |
| | 11 | 0.1730 | 1,194 |
| | 12 | 0.1825 | 1,204 |
| | 13 | 0.1767 | 1,253 |
| | 14 | 0.2053 | 1,222 |
| | 15 | 0.0337 | 1,235 |
| | 16 | 0.0434 | 1,175 |
| | 17 | 0.2040 | 1,262 |
| | 18 | 0.1640 | 1,219 |
| | 19 | 0.1550 | 1,212 |
| | 20 | 0.1007 | 1,180 |
| | 21 | 0.0848 | 1,120 |

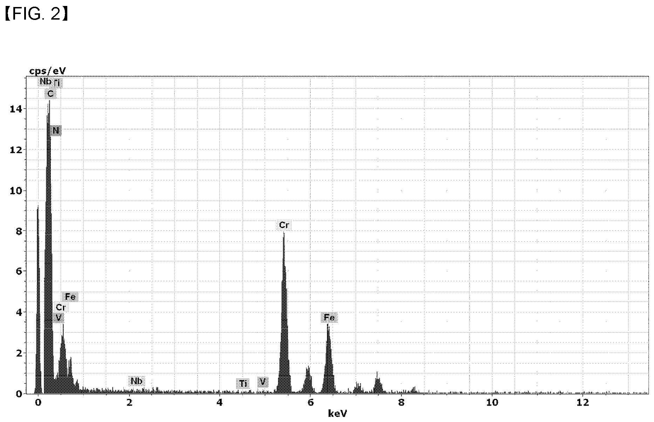

As shown in Table 3, when the C+N content was 0.25% or more, a yield strength of 1,280 MPa or more could be achieved without generating a strain-induced martensite phase. Steel grades 7 and 8 in Table 2 satisfies Formula (1), Formula (2), and permeability, but the C+N content was less than 0.25%, indicating that the yield strength of the final cold-rolled material was 1,230 MPa or less. It was confirmed that the increase in yield strength upon addition of high content of C and N was due to precipitation of the fine carbonitride secondary phase as shown in FIGS. 1 and 2.

In the above description, exemplary embodiments of the present disclosure have been described, but the present disclosure is not limited thereto. Those of ordinary skill in the art will appreciate that various changes and modifications can be made without departing from the concept and scope of the following claims.

[Industrial Applicability]

The austenitic stainless steel according to the present disclosure can realize nonmagnetic and high strength characteristics, so it can be variously applied to the fields requiring non-magnetic properties such as smart devices that are gradually becoming diverse.

## Claims

1.  A high strength non-magnetic austenitic stainless hot-rolled annealed steel sheet comprising, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities, and satisfying a following Formula (1).

(1)    [{Cr+Mo+1.5*Si+18}/{Ni+30*(C+N)+0.5*Mn+36}+0.262]*161-161-

log(cooling rate) < 0
(Here, Cr, Mo, Si, Ni, C, N, Mn mean the content (% by weight) of each element, and the cooling rate means the cooling rate (°C/s) of the cast slab solidified from molten steel)

2. The high strength non-magnetic austenitic stainless hot-rolled annealed steel sheet of claim 1, wherein the high strength non-magnetic austenitic stainless hot-rolled annealed steel sheet has a permeability $\mu$ of 1.01 or less.

3. The high strength non-magnetic austenitic stainless hot-rolled annealed steel sheet of claim 1, wherein the high strength non-magnetic austenitic stainless hot-rolled annealed steel sheet satisfies C+N: 0.25% or more.

4. A high strength non-magnetic austenitic stainless cold-rolled steel sheet comprising, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less, the remainder of iron (Fe) and other inevitable impurities, satisfying C+N: 0.25% or more, and satisfying following Formulas (1) and (2).

(1)    [{Cr+Mo+1.5*Si+18}/{Ni+30*(C+N)+0.5*Mn+36}+0.262]*161-161-

log(cooling rate) < 0

(2) 551 - 462*(C+N) - 9.2*Si - 8.1*Mn - 13.7*Cr – 29*Ni - 18.5*Mo $\leq$ -200

(Here, Cr, Mo, Si, Ni, C, N, Mn mean the content (% by weight) of each element, and the cooling rate means the cooling rate (°C/s) of the cast slab solidified from molten steel)

5. The high strength non-magnetic austenitic stainless cold-rolled steel sheet of claim 4, wherein the cold-rolled steel sheet is a cold-rolled material with a reduction ratio of 80% or more, and has a permeability $\mu$ of 1.02 or less.

6. The high strength non-magnetic austenitic stainless cold-rolled steel sheet of claim 4, wherein the cold-rolled steel sheet is a cold-rolled material with a reduction ratio of 80% or more, and has a yield strength of 1,280MPa or more.

7. The high strength non-magnetic austenitic stainless cold-rolled steel sheet of claim 4, wherein a number of carbonitride precipitates having an average diameter of 20 to 200 nm is 40 pieces/$\mu m^2$ or more

8. A manufacturing method of a high strength non-magnetic austenitic stainless steel, the manufacturing method comprising,
manufacturing a hot-rolled annealed steel sheet by performing hot rolling and annealing heat treatment on a slab comprising, in percent (%) by weight of the entire composition, C: 0.02 to 0.12%, Si: 1.2% or less, Mn: 0.5 to 2.0%, Cr: 17.0 to 22.0%, Ni: 11.0 to 15.0%, Mo: 3.0% or less, N: 0.25% or less %, C+N: 0.25% or more, the remainder of iron (Fe) and other inevitable impurities; and
manufacturing a cold-rolled steel sheet by cold rolling the hot-rolled annealed steel sheet at a reduction ratio of 80% or more, and
wherein the slab satisfies following Formulas (1) and (2),
a permeability $\mu$ of the cold-rolled steel sheet is 1.02 or less.

(1)    [{Cr+Mo+1.5*Si+18}/{Ni+30*(C+N)+0.5*Mn+36}+0.262]*161-161-

log(cooling rate) < 0

(2) 551 - 462*(C+N) - 9.2*Si - 8.1*Mn - 13.7*Cr – 29*Ni - 18.5*Mo $\leq$ -200

(Here, Cr, Mo, Si, Ni, C, N, Mn mean the content (% by weight) of each element, and the cooling rate means the cooling rate (°C/s) of the cast slab solidified from molten steel)

9. The manufacturing method of claim 8, wherein the permeability $\mu$ of the hot-rolled annealed steel sheet is 1.01 or less, and an increase in permeability by the cold rolling is 0.01 or less.

10. The manufacturing method of claim 8, wherein the cold-rolled steel sheet has a yield strength of 1,280 MPa or more, and a number of carbonitride precipitates having an average diameter of 20 to 200 nm is 40 pieces/$\mu$m$^2$ or more.

【FIG. 1】

6874
BF  MAG: 160000 x  HV: 200.0 kV  WD: -1.0 mm
100 nm

【FIG. 2】

## INTERNATIONAL SEARCH REPORT

| International application No. |
| --- |
| **PCT/KR2019/014536** |

**A. CLASSIFICATION OF SUBJECT MATTER**
*C22C 38/58(2006.01)i, C22C 38/44(2006.01)i, C22C 38/02(2006.01)i, C22C 38/00(2006.01)i, C22C 38/04(2006.01)i, C21D 8/02(2006.01)i*
According to International Patent Classification (IPC) or to both national classification and IPC

**B. FIELDS SEARCHED**

Minimum documentation searched (classification system followed by classification symbols)
C22C 38/58; C21D 8/02; C22C 38/00; C22C 38/44; C22C 38/02; C22C 38/04

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: non-magnetic, austenite, stainless

**C. DOCUMENTS CONSIDERED TO BE RELEVANT**

| Category* | Citation of document, with indication, where appropriate, of the relevant passages | Relevant to claim No. |
| --- | --- | --- |
| X | JP 07-113144 A (NISSHIN STEEL CO., LTD.) 02 May 1995 See paragraph [0020], claims 1-3 and tables 2-3. | 1-10 |
| X | CN 101781740 A (JIANGSU HONGTAI STAINLESS STEEL WIRE ROPE CO., LTD.) 21 July 2010 See claim 1. | 1,3-4 |
| A | CN 103924160 A (BAODING FENGFAN PRECISION CASTING CO., LTD.) 16 July 2014 See paragraphs [0009]-[0010] and claim 1. | 1-10 |
| A | JP 2003-082445 A (NISSHIN STEEL CO., LTD.) 19 March 2003 See paragraph [0018] and claims 1-4. | 1-10 |
| A | JP 2015-199997 A (NISSHIN STEEL CO., LTD.) 12 November 2015 See paragraph [0029] and claims 1, 7. | 1-10 |

☐ Further documents are listed in the continuation of Box C.　　☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 MARCH 2020 (04.03.2020) | **04 MARCH 2020 (04.03.2020)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**EP 3 865 600 A1**

## INTERNATIONAL SEARCH REPORT
Information on patent family members

| International application No. |
|---|
| **PCT/KR2019/014536** |

| Patent document cited in search report | Publication date | Patent family member | Publication date |
|---|---|---|---|
| JP 07-113144 A | 02/05/1995 | None | |
| CN 101781740 A | 21/07/2010 | None | |
| CN 103924160 A | 16/07/2014 | CN 103924160 B | 29/06/2016 |
| JP 2003-082445 A | 19/03/2003 | JP 3939568 B2 | 04/07/2007 |
| JP 2015-199997 A | 12/11/2015 | JP 6308849 B2 | 11/04/2018 |

Form PCT/ISA/210 (patent family annex) (January 2015)

16